(19) **Europäisches Patentamt / European Patent Office / Office européen des brevets**

(11) **EP 4 028 692 B1**

(12) **FASCICULE DE BREVET EUROPEEN**

(45) Date de publication et mention de la délivrance du brevet:
**01.11.2023 Bulletin 2023/44**

(21) Numéro de dépôt: **20792293.1**

(22) Date de dépôt: **11.09.2020**

(51) Classification Internationale des Brevets (IPC):
**F23G 5/30** *(2006.01)*

(52) Classification Coopérative des Brevets (CPC):
**F23G 5/30;** F23G 2203/50; F23G 2209/12; Y02W 10/40

(86) Numéro de dépôt international:
**PCT/EP2020/075518**

(87) Numéro de publication internationale:
**WO 2021/048386 (18.03.2021 Gazette 2021/11)**

(54) **PROCÉDÉ ET FOUR D'INCINÉRATION DE MATIÈRES ORGANIQUES ISSUES DU TRAITEMENT DE DÉCHETS INDUSTRIELS OU AGRICOLES OU DES EAUX USÉES, TEL QUE DES BOUES**

VERFAHREN UND OFEN ZUM VERBRENNEN VON ORGANISCHEN STOFFEN AUS DER BEHANDLUNG VON INDUSTRIELLEN ODER LANDWIRTSCHAFTLICHEN ABFÄLLEN ODER ABWASSER, WIE SCHLAMM

METHOD AND FURNACE FOR INCINERATING ORGANIC MATTER DERIVED FROM THE TREATMENT OF INDUSTRIAL OR AGRICULTURAL WASTE OR WASTEWATER, SUCH AS SLUDGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2019 FR 1910166**

(43) Date de publication de la demande:
**20.07.2022 Bulletin 2022/29**

(73) Titulaire: **Suez International**
**92040 Paris la Défense Cedex (FR)**

(72) Inventeur: **BOURDAIS, Jean-Louis**
**44110 Châteaubriant (FR)**

(74) Mandataire: **IPAZ**
**16, rue Gaillon**
**75002 Paris (FR)**

(56) Documents cités:
**FR-A1- 2 989 597      JP-A- S57 127 716**
**US-A- 4 363 292**

**Description**

La présente invention concerne un four pour l'incinération de matières organiques issues du traitement de déchets industriels ou agricoles ou des eaux usées, telles que des boues, et plus particulièrement un four à lit de sable fluidisé, ainsi qu'un procédé d'incinération de matières organiques telles que des boues.

Un four d'incinération à lit fluidisé comprend une enceinte dans la partie inférieure de laquelle se trouve un lit de particules, préférentiellement du sable constituant la zone de fluidisation dans laquelle des boues sont injectées en tant que combustible. Au-dessous de la zone de fluidisation, se trouve une boîte à vent qui reçoit par une entrée radiale, l'air de fluidisation, de préférence, chauffé. La partie supérieure de la boîte à vent supporte un dôme de fluidisation. Ce dôme de fluidisation est une pièce essentielle du four car c'est au travers de ce dôme que se fait la répartition de l'air de fluidisation, par l'intermédiaire de passages, par exemple pourvus de buses de soufflage, ménagés au travers du dôme. Des fours à lit fluidisé de ce type sont décrits dans JP-S-57127716 et US-A-4 363 292.

Le four à lit fluidisé fonctionne sur le principe de la mise en suspension par un fluide préchauffé ou pas, de particules préférentiellement de sable pré-calibrées. La physique et la thermodynamique des lits fluidisés ont été largement décrits dans des ouvrages de référence tels que «Fluidisation engineering», de Daizo Kunii et Octave Levenspiel, «Fluidisation», de Max Leva) ou encore de Nichols. Le dôme de fluidisation sépare le collecteur du fluide et les particules mises en fluidisation. Il permet une bonne répartition du fluide au travers de buses de soufflage, ou tuyères de fluidisation constituant des passages vers la zone de fluidisation.

Le lit de sable fluidisé est porté à la température d'incinération (750-850 °C) et constitue un milieu extrêmement turbulent dans lequel les échanges de chaleur atteignent des coefficients de transfert très élevés. Les matières organiques, typiquement des boues déshydratées, alimentées en général à la base de ce lit, en un ou plusieurs points, sont très rapidement désintégrées par la turbulence du sable, l'évaporation prend place instantanément ainsi que la combustion partielle de la matière organique avec l'air de fluidisation comme comburant.

On utilise généralement un lit fluidisé dense avec ou sans débordement de lit avec une hauteur du lit expansé stable (aux pertes de sable près, dues à l'attrition). En effet, la matière minérale des boues a une granulométrie très faible par rapport aux grains de sable du lit, si bien que la totalité des cendres minérales sont entraînées pneumatiquement dans la zone supérieure du four et ensuite dans les conduites d'évacuation des fumées (cendres volantes).

Le procédé d'incinération mis en oeuvre dans un four de ce type permet donc de détruire de la matière organique prisonnière d'une matrice minérale et/ou liquide, comme c'est le cas par exemple des boues issues d'une station d'épuration, ou des boues issues de traitement de déchets, industriels ou agricoles ou des eaux usées. Il est le plus répandu pour effectuer cette destruction tout en respectant les normes liées à la réglementation.

Les boues qui sont brûlées dans ce type de four, sont en général pâteuses et comportent encore beaucoup d'eau en sortie des systèmes de déshydratation classique, la teneur en eau dans les boues étant généralement située entre 55% et 85% du brut. Une réaction d'oxydo-réduction est mise en oeuvre dans le four en faisant réagir la matière organique en tant que combustible et un fluide de mise en expansion qui est, dans la plupart des cas, de l'air en tant que comburant.

Comme les boues traitées comportent généralement encore beaucoup d'eau - ce qui refroidit fortement le lit et le four - la seule matière organique des boues qui comporte un pouvoir calorifique élevé, peut ne pas être suffisante pour maintenir le four à 850°C qui est sa température minimale de fonctionnement.

Ainsi selon la qualité des boues, le four peut requérir l'injection de combustible auxiliaire (gaz naturel, biogaz ou fioul ou charbon ou tout type de résidu organique comportant un pouvoir calorifique supérieure à 15 000 kJ/kg de matière organique) pour maintenir la température requise par la réglementation, qui est en France 850°C.

Il est toutefois possible de ne pas recourir à ce combustible auxiliaire pendant l'incinération grâce au seul apport calorifique de la matière organique des boues dès lors que la teneur en eau de cette matière organique est faible.

La demanderesse propose, par ailleurs, un procédé amélioré permettant de réduire la consommation de combustible auxiliaire via une récupération d'énergie sur les fumées afin d'obtenir des boues mieux déshydratées par évaporation partielle de la fraction en eau et obtenir un équilibre entre l'eau et la matière organique minimisant le combustible auxiliaire

Cependant pour démarrer le four, on a toujours recours à un combustible auxiliaire tel que gaz, fioul, en général. Cette injection de combustible est réalisée dans le lit, préférentiellement dans le premier tiers du lit, situé en partie basse du lit, et au-dessus de la grille de fluidisation, se trouvant au-dessus du dôme, séparant le fluide et le lit.

Toutefois, il n'est à l'heure actuelle pas possible d'éliminer totalement le besoin d'une consommation de combustible auxiliaire. L'une des raisons à cet inconvénient est que la quantité de matières organiques telles que des boues à traiter par incinération est bien souvent très inférieure à une valeur nominale qui a servi à dimensionner la taille du four.

En effet, les projets de construction d'atelier d'incinération doivent répondre à un cahier des charges qui, généralement, demande d'incinérer des boues ayant une production donnée au démarrage de l'exploitation et une production très supérieure à celle du démarrage, à horizon futur (10 ou 20 ans par exemple) pour anticiper la croissance. Entre ces deux situations, le débit de boues peut être doublé alors que le four d'incinération a, au mieux une flexibilité de 1 à 1.6 pour une taille de sa gamme sélectionnée.

D'une manière récurrente, le débit de boues, en phase de démarrage, est très inférieur au volume souhaité et visé pour lequel la construction du four a été élaborée. Ainsi, pour commencer une exploitation, on aurait besoin d'utiliser un four dont les dimensions correspondent au débit de démarrage puis l'exploitation évoluant vers le débit de boues visé, il conviendrait de remplacer ce four de démarrage par un four dont les dimensions sont appropriées pour traiter le débit de boues visé. Compte-tenu des coûts générés, une telle solution est exclue.

Ainsi, un four est généralement conçu pour fonctionner à horizon futur et il peut alors fonctionner sur deux modes, au démarrage de l'exploitation :

- soit on traite la production de boues d'une période donnée, en général une semaine, en quelques jours pour être aux conditions de fonctionnement du four.

- soit la production de boues est répartie pour les incinérer en continu, par exemple sur la semaine, ce qui revient à fonctionner avec un régime horaire plus faible et en général inférieur au débit minimal accepté par le four pour avoir le meilleur rendement et/ou rester auto-thermique.

Dans ces deux cas, un combustible auxiliaire est utilisé en complément pour l'appoint :

- soit pour maintenir le four chaud pendant les phases hors incinération (phase dite de maintien). Le maintien chaud du four est réalisé aux alentours de 800°C +/-50°C dans le lit de sable ce qui permet aussi de maintenir chaud les équipements en aval du four et limiter l'amplitude des cycles thermiques dommageables pour les équipements.

- soit pendant l'incinération pour combler le manque d'énergie dû à la baisse du débit de boues, et par conséquent de la matière organique source intrinsèque d'énergie ; mais aussi dû aux pertes thermiques plus importantes dans les fumées. En effet le débit d'air en présence est alors très supérieur aux proportions stoechiométriques de la combustion des boues.

Ce ratio stoechiométrique correspond au débit d'air strictement nécessaire pour assurer la combustion (ou l'oxydation) totale du combustible. Tout excès d'air génère en effet des pertes énergiques, puisqu'il constitue alors une masse supplémentaire à réchauffer.

Une solution pourrait être de baisser la quantité d'air pour être en adéquation avec la quantité de boues et se rapprocher d'un ratio stoechiométrique proche de 1.

Cependant, il existe une limite basse de la quantité d'air qui permet la fluidisation des particules, ici de sable notamment. Cet air est injecté à la base du lit de sable dans le four. En dessous de ce débit minimal, le sable est mal fluidisé et n'est plus opérationnel pour briser en petits morceaux les boues qui sont injectées sous forme de cylindre de diamètre compris entre 50 mm et 250 mm, notamment 100 mm environ. Dans une dimension donnée du four, la variation de débit d'air entre une valeur maximale et une valeur minimale est de 60%, ce qui correspond à une variation de débit de boue de 60% à quelques % près en jouant sur l'excès d'air, autrement dit le débit de boue peut varier de 1 à 1.6. Cette plage de conception de four, avec une dimension de fonctionnement maximale correspondant à la capacité de fonctionnement du four au nominal de la production de boue, notée X, permet de fonctionner avec des capacités réduites jusqu'à 60%, c'est-à-dire avec un débit de boue jusqu'à 60 % inférieur à la capacité nominale du four, tout en conservant un rapport air-boue favorable à une bonne combustion et une bonne fluidisation.

Un débit trop faible ne permet pas non plus d'assurer la combustion dans le lit de sable de la matière volatile. La température du sable baisse et n'est plus homogène ce qui peut créer des zones mortes avec un risque d'agglomération du sable conduisant à l'arrêt de la fluidisation totale du lit.

Il pourrait aussi être envisagé de diminuer la granulométrie des particules - par exemple en changeant la matrice du lit fluidisé - et ainsi permettre de baisser le débit d'air nécessaire à la fluidisation. Une telle solution existe mais reste difficile de mise en oeuvre et peut s'avérer insuffisante : la plage de capacité pourrait potentiellement être portée de 1 - 1.6 à 1 - 2.0 toujours au sein même d'une dimension de four.

Les limites majeures de telles solutions apparaissent lorsque les régimes extrêmes de production (démarrage et futur), ne peuvent être étendus sur une dimension unique de four.

Afin de pallier ces inconvénients, l'invention propose donc de pouvoir modifier le débit d'air de fluidisation en adéquation avec le volume de boues à traiter sans affecter la qualité de fluidisation du lit de sable, et ce de manière temporaire si besoin. En d'autres termes, l'invention consiste à proposer un four dont les dimensions sont définies au niveau du dôme de fluidisation, par exemple 2,93 m en fonction d'une production recherchée à venir (généralement un fonctionnement dans le régime bas de ses dimensions), dimensions qui peuvent être modifiées de manière momentanée, à des dimensions de four d'une taille inférieure, par exemple un diamètre réduit à 2,34 m pour le démarrage de ce four.

On étend ainsi une plage de capacité maximale d'un four de dimensions données de 1 à 1,6 à une plage de 1 à 3 pour le débit de boue pour les fours de petites dimensions et de 1 à 2 pour les fours de grandes dimensions, en combinant le régime minimal de fonctionnement d'un four avec son volume et son débit d'air réduits et son régime maximal avec son volume et son débit initial.

A cet effet, l'invention a pour objet un procédé d'incinération de matières organiques, constituées de matière organique prisonnière d'une matrice minérale et/ou liquide, notamment issues du traitement des eaux usées, de déchets industriels ou agricoles, telles que des boues et notamment des boues de stations d'épuration, dans un four d'incinération à lit fluidisé,

ledit four comprenant une enceinte dans la partie inférieure de laquelle se trouve un lit de particules, préférentiellement du sable, constituant une zone de fluidisation Zf,

zone de fluidisation Zf dans laquelle les matières organiques sont introduites en tant que combustible tandis que de l'air est injecté en tant que comburant dans le lit de sable depuis une boîte à vent au travers d'un dôme de fluidisation surmontant ladite boîte,

l'air traversant des passages aménagés dans le dôme de fluidisation,

le four étant configuré pour traiter une valeur nominale Vn de volume de matières organiques à traiter Vmo,

ledit procédé comprenant une étape d'ajustement du volume de la zone de fluidisation Zf et avantageusement du débit d'air entrant dans ladite zone de fluidisation Zf, en fonction du volume de matières organiques à traiter Vmo dans laquelle, lorsque le volume de matières organiques à traiter Vmo est inférieur à la valeur nominale Vn, on réduit le volume de la zone de fluidisation d'un volume initial Vfi à un volume réduit Vfr, et on réduit le débit d'air en obturant des passages d'air pour ne laisser actifs que les passages débouchant dans la zone de fluidisation ainsi réduite Zfr.

De manière avantageuse, le procédé selon l'invention permet, en réduisant le volume de la zone de fluidisation Zf, et en limitant les passages du dôme de fluidisation à ceux actifs dans cette zone de fluidisation réduite Zfr, de définir un volume de zone de fluidisation réduite Vfr qui permet un traitement d'incinération le plus optimal possible par rapport au volume de matières organiques à traiter Vmo, adapté aux conditions de démarrage à petit débit de matières organiques.

Ainsi, lorsque le volume de boues à traiter est inférieur à la valeur nominale de volume de boues à traiter et que la limite basse de fluidisation est atteinte avec un four de dimension X, on réduit le volume ce qui correspondrait à un four de dimension X-1 ou à une taille intermédiaire de la zone de fluidisation et on obture des passages d'air pour ne laisser actifs que les passages débouchant dans cette zone de fluidisation réduite.

De plus, de manière avantageuse, cet ajustement du volume de la zone de fluidisation est une réduction de volume, de préférence temporaire. Ainsi, le procédé comporte alors une étape d'ajustement de volume complémentaire dans laquelle dès que le volume de matières organiques à traiter Vmo se rapproche ou atteint la valeur nominale Vn, on restaure le volume initial de la zone de fluidisation Vfi approprié pour traiter le volume nominal Vn de matières organiques à traiter, et avantageusement également le débit d'air initial entrant dans ladite zone en libérant les passages d'air du dôme de fluidisation qui étaient obstrués. On peut ainsi mettre en oeuvre le procédé d'incinération en limitant la consommation de combustible et par conséquent, de combustible auxiliaire.

Ce procédé peut avantageusement être appliqué sur des fours existants et opérationnels tout comme pour des projets futurs (fours en construction ou à construire). Ainsi, on installe alors un insert se présentant sous forme d'un manchon de forme complémentaire à la portion de l'enceinte du four délimitant la zone de fluidisation Zf et s'étendant contre ladite portion de l'enceinte depuis le dôme de fluidisation sur une hauteur inférieure ou égale à la hauteur de la zone de fluidisation.

Ainsi, au moins le volume de la zone de fluidisation est réduit par la mise en place de moyens de réduction du volume de la zone de fluidisation Zf, constitués de cet insert se présentant sous forme d'un manchon de forme et de hauteur complémentaires à la portion de l'enceinte du four délimitant la zone de fluidisation Zf, s'étendant contre ladite portion de l'enceinte depuis le dôme de fluidisation, et délimitant un volume intérieur correspondant au volume de la zone de fluidisation réduit.

Selon une variante du procédé, on peut également réduire le volume de l'enceinte du four au-dessus de la zone de fluidisation, en installant un insert sur toute la hauteur du four. De manière avantageuse, la réduction du volume de l'enceinte au-dessus de la zone de fluidisation peut permettre d'améliorer l'évacuation des cendres et de limiter les pertes thermiques. Avec cette variante, on améliore encore le gain énergétique et économique.

Au sens de la présente invention, le manchon est un élément cylindrique dont la forme correspond à une forme cylindrique de la zone de fluidisation. Cependant, le plus souvent la zone de fluidisation d'un four présente une forme tronconique et le manchon est également de forme tronconique.

Selon ce mode de réalisation, la paroi du manchon présente une épaisseur qui peut être constante ou variable, notamment progressive, qui définit un diamètre intérieur dudit manchon, ce diamètre intérieur correspondant au diamètre réduit de la nouvelle zone de fluidisation réduite Zfr délimitée par ce manchon.

Le manchon est avantageusement installé le long de la paroi de la zone de fluidisation dans le four et s'étend depuis le dôme de fluidisation, masquant les passages d'air ménagés au travers du dôme de fluidisation, à la périphérie de celui-ci, et se retrouvant sous l'épaisseur dudit manchon, ce qui réduit l'entrée d'air à la zone de fluidisation réduite. Ce manchon constitue également des moyens d'obturation.

Ainsi, de manière avantageuse, on peut exprimer le débit volumique d'air de fluidisation réduit selon la formule suivante, correspondant à la même formule pour le cas nominal, et qui tient compte du débit de matières organiques à traiter :

$$\Phi v' = \Phi b' \times S \times MV \times Coef1 \times Coef2, \text{ avec}$$

$\Phi v'$ : débit d'air de fluidisation en kg/h

$\Phi b'$ : débit de boues brutes en kg/h, (la boue brute étant de l'eau et de la matière sèche, la matière sèche étant la matière minérale et la matière organique).

S : fraction de matière sèche dans les boues brutes en %

MV : fraction de matière organique dans la fraction sèche en %

Coef1 : ratio stoechiométrique correspondant à la quantité d'air en kg/h pour brûler 1 kg de matière organique variable entre 5 et 10 selon les types de matière organiques

Coef2 : excès d'air souhaité pour assurer la combustion complète de la matière organique entre 1.01 et 1.4.

On entend par boues brutes, encore appelé boues humides, le mélange entrant de matière sèche et d'eau. La siccité de ces boues brutes est de préférence entre 18 et 35%, généralement de l'ordre de 22-26%.

Selon un mode de réalisation encore plus préféré, l'enceinte au niveau de la zone de fluidisation présente une forme tronconique entre 0° et 45° par rapport à la verticale, l'insert ou manchon étant préférentiellement de forme tronconique :

- son diamètre extérieur Dext égal au diamètre du tronc de cône de l'enceinte sur la hauteur du cône ajouté :
  Dext = D1 pouvant varier sur la hauteur H , avec

    D1 : diamètre intérieur de la zone de fluidisation de l'enceinte conçue pour la production à horizon futur ;

    H : hauteur de la zone où sur laquelle se développe la fluidisation des particules en dynamique

- son diamètre intérieur Dint égal au diamètre extérieur du tronc de cône ajouté moins deux fois une épaisseur A du manchon
  Dint = Dext - A x 2, avec A : épaisseur de l'insert ajouté en périphérie de la zone de fluidisation pour réduire le diamètre de la zone de fluidisation, celle-ci pouvant être constante ou variable, et en particulier progressive, et avantageusement compris entre 0,15 et 0,7 m, de préférence compris entre 0.25 m et 0,35 m,

- la hauteur du tronc de cône H étant choisie tel que : H = B + C,

    avec B correspondant à la hauteur du lit de particules au repos, B étant compris entre 0.3 m et 1.5 m, de préférence égal à environ 1 m, et

    C correspondant à la dynamique, c'est-à-dire la turbulence souhaitée dans le lit de sable compris entre 0 et 2 m, de préférence compris entre 0.3 et 0.5 m. Cette turbulence ou dynamique correspond à la hauteur de projection des particules.

La réduction du débit d'air est avantageusement réalisée en obturant les passages d'air situés en périphérie du dôme de fluidisation, et qui se retrouvent sous les moyens de réduction du volume qui servent avantageusement de moyens d'obturation des passages d'air.

Ainsi, dans le but de maintenir la fluidisation des particules, le volume de la zone de fluidisation Vfr est de préférence réduit par un volume annulaire en matériaux résistant à l'abrasion et la température ajouté en périphérie de la zone de fluidisation. Ce volume annulaire tel qu'une paroi rapportée contre la paroi de l'enceinte constitue l'insert ou manchon.

On peut également envisager un insert installé dans la zone de fluidisation au-dessus du dôme de fluidisation, mais pas le long de la paroi de ladite zone, pour réduire le volume de cette zone de fluidisation et le débit d'air en obstruant une partie des passages d'air.

Un exemple de matériau résistant à l'abrasion et aux hautes températures est par exemple un béton réfractaire, ou des briques réfractaires.

Le débit volumique d'air de fluidisation de la zone de fluidisation de volume réduit $\Phi_v$' est donc réduit proportionnellement au débit d'air initial $\Phi v$ et à l'épaisseur de l'élément cylindrique selon la formule suivante :

$$\Phi v' = \Phi v \times ((D1 - 2A) / D1)^2$$

avec

D1 : diamètre intérieur à la base de la zone de fluidisation de l'enceinte conçue pour la production à horizon futur, en m

A : épaisseur de l'élément ajouté en périphérie de la zone de fluidisation pour réduire le diamètre de la zone de fluidisation, typiquement compris entre 0,2 m et 0,7 m, de préférence compris entre 0.25 m à 0,35 m.

La présente invention a également pour objet un four d'incinération de matières organiques, constituées de matière organique prisonnière d'une matrice minérale et/ou liquide, notamment issues du traitement des eaux usées, de déchets industriels ou agricoles, telles que des boues et notamment des boues de stations d'épuration, et présentant une enceinte dans la partie inférieure de laquelle se trouve un lit de particules fluidisé, préférentiellement du sable, le four comprenant en outre au moins du bas vers le haut :

une boîte à vent dont la partie supérieure supporte un dôme de fluidisation, présentant des passages au travers desquels l'air issu de la boîte à vent est réparti dans une zone de fluidisation Zf qui correspond au lit de particules,

au moins une alimentation en matières organiques et au moins des moyens d'injection de combustible d'appoint étant prévues pour alimenter la zone de fluidisation,

-au-dessus de la zone de fluidisation Zf se trouve une zone de d'expansion et de post-combustion, surmontée d'une voûte supérieure de l'enceinte au niveau de laquelle se trouve une conduite d'évacuation des produits de combustion,

le four étant configuré pour le traitement d'une valeur nominale Vn de volume de matières organiques à traiter Vmo, et

ledit four étant caractérisé en ce qu'il comporte des moyens de réduction du volume de la zone de fluidisation d'un volume initial Vfi à un volume réduit Vfr, et des moyens d'obturation des passages d'air configurés pour réduire le débit d'air entrant en ne laissant actifs que les passages débouchant dans la zone de fluidisation réduite Zfr, lorsque le volume de matières organiques à traiter Vmo est inférieur à la valeur de volume de matières organiques nominale Vn.

Ainsi, lorsque le volume de matières organiques Vmo à traiter est inférieur à la valeur nominale Vn (typiquement de 30% à 80% de Vn), le four peut fonctionner de manière optimale car le volume de la zone de fluidisation est réduit d'un volume initial Vfi à un volume réduit Vfr et le débit d'air injecté est réduit par une partie des passages d'air obturée pour ne laisser actifs que les passages débouchant dans la zone de fluidisation ainsi réduite. Le four selon l'invention permet la mise en oeuvre du procédé d'incinération décrit ci-dessus.

De manière très avantageuse, les moyens de réduction et les moyens d'obturation sont en outre démontables, de sorte que lorsque le volume de matières organiques à traiter Vmo est proche ou égal à la valeur nominale Vn, on peut les retirer et restaurer le volume initial Vfi et le nombre de passages d'air de la zone de fluidisation.

Ainsi, il est possible de réduire le volume de la zone de fluidisation et le volume d'air insufflé dedans pour traiter de manière optimale un volume de matières organiques Vmo inférieur à celui de la valeur nominale Vn tout en conservant les dimensions d'un four pour une utilisation future.

De manière avantageuse, les moyens de réduction du volume de la zone de fluidisation et les moyens d'obturation des passages d'air sont confondus.

Selon un mode de réalisation préféré, lesdits moyens de réduction et d'obturation sont constitués d'un insert installé dans la zone de fluidisation du four se présentant en forme de manchon de forme complémentaire à la portion de l'enceinte délimitant la zone de fluidisation et s'étendant contre ladite portion de l'enceinte depuis le dôme de fluidisation, formant une paroi supplémentaire doublant la paroi de la zone de fluidisation et obturant les passages d'air ménagés dans le dôme à la périphérie de celui-ci.

Ce manchon peut donc être cylindrique lorsque la zone de l'enceinte est cylindrique. De préférence, la zone de fluidisation étant de forme tronconique, les moyens de réduction et d'obturation sont constitués d'un manchon tronconique, résistant à l'abrasion et à la température. Il s'emboîte dans la zone de tronc cône existant jusqu'à la base de la grille de fluidisation. Ainsi la section au niveau de la grille est réduite et à vitesse égale, le débit d'air de fluidisation est avantageusement réduit.

L'épaisseur de l'insert tel qu'un manchon cylindrique ou tronconique, est proportionnelle à la réduction du débit d'air souhaité pour brûler les boues ou autres déchets. De préférence, son épaisseur correspond à l'épaisseur d'un anneau de buses de fluidisation en périphérie du dôme de fluidisation. En effet, un dôme peut être constitué d'une succession d'anneaux concentriques portant respectivement des passages d'air tels que des buses de fluidisation, des éjecteurs de soufflage. L'épaisseur de l'insert est donc choisie pour définir le volume de la zone de fluidisation réduite Vfr et une section du dôme de fluidisation réduite.

L'épaisseur du manchon qui peut être constante ou variable, de préférence progressive, est ainsi choisie avantageusement pour définir le volume de la zone de fluidisation réduite Zfr et une section du dôme de fluidisation réduite, l'épaisseur de ce manchon étant proportionnelle à la réduction du débit d'air souhaité pour brûler les boues ou autres déchets.

Ainsi, le volume de la zone de fluidisation Vfr est de préférence réduit par un volume annulaire en matériaux résistant à l'abrasion et la température ajouté en périphérie de la zone de fluidisation, ce volume annulaire tel qu'une paroi rapportée contre la paroi de l'enceinte constitue l'insert ou manchon.

Selon un mode de réalisation du four selon l'invention, des moyens de réduction de volume s'étendent au-delà de la zone de fluidisation sur toute la hauteur du four. On limite ainsi également le volume de l'enceinte du four. Cette réduction du volume de l'enceinte au-dessus de la zone de fluidisation peut permettre d'améliorer le gain énergétique et économique notamment en améliorant l'évacuation des cendres et en limitant les pertes thermiques.

Selon un mode de réalisation, les moyens de réduction et d'obturation sont rapportés dans un four existant dont on souhaite optimiser le fonctionnement par rapport à une quantité nominale de matières organiques à traiter qui n'est pas encore atteinte.

En variante, les moyens de réduction et d'obturation sont prévus lors de la construction du four, de manière à permettre un démarrage de l'exploitation.

De manière avantageuse, les moyens de réduction et d'obturation s'étendent le long des parois de la zone de fluidisation et de par leur épaisseur diminuent le diamètre de ladite zone tout en obturant les passages ménagés dans le dôme de fluidisation et au-dessus desquels ils reposent. Ces moyens de réduction et d'obturation peuvent être mis en place sur des fours existant mais peuvent aussi être déployés sur des fours en construction afin d'optimiser la consommation de combustible dès le démarrage.

Ils sont facilement ajoutés par construction de pièces élémentaires (paroi supplémentaire ajoutée dans la zone de fluidisation Zf) après la construction finale ou pendant la construction initiale. Ils peuvent donc être démontés tout aussi facilement, pour redonner au four son volume intégral nécessaire au débit nominal de matières organiques, et notamment des boues, pour lequel il était prévu.

Les matériaux employés pour réaliser cette paroi peuvent être d'une qualité similaire à la paroi intérieure réfractaire du four. Ce sont par exemple des briques réfractaires comportant typiquement au moins 20% d'alumine (préférentiellement 42-45% d'alumine) pour tenir à l'abrasion qu'exerce le sable en mouvement. Elles sont typiquement assemblées avec du ciment de jointement.

En variante, un béton réfractaire, et notamment un béton comprenant entre 30 et 35% d'alumine en poids par rapport au poids total du béton, peut être employé pour réaliser cette paroi supplémentaire. Dans ce cas, le béton peut être projeté ou moulé contre la paroi intérieure de la zone de fluidisation. De tels matériaux permettent une utilisation des moyens de réduction d'environ 1 à 2 ans dans les conditions de fonctionnement du four, mais sont en général moins résistants que le matériau constituant le four lui-même, ce qui facilite la destruction de ces moyens de réduction lorsque l'on veut restaurer le volume initial Vfi. De préférence les matériaux utilisés pour les moyens d'obturation et de réduction moins résistants que les matériaux constituant le four lui-même, peuvent donc être des bétons réfractaires avec une teneur d'alumine comprise entre 30 et 35% en poids par rapport au poids total du béton alors que les bétons utilisé pour réaliser le four lui-même présente de préférence une teneur en alumine de 40 à 42%. La paroi formant insert peut ainsi être réalisée avec des matériaux moins chers.

Un four selon l'invention est avantageusement réalisé avec les mêmes matériaux et outils de façonnage utilisés pour construire l'intérieur d'un four.

Ces matériaux sont généralement des briques réfractaires et/ou du béton réfractaire ou une combinaison des deux. Les moyens de réduction et d'obturation peuvent être préfabriqués en usine avant d'être installés dans un four ou bien, ils peuvent être réalisés sur place, c'est-à-dire dans le four, par assemblage de briques, projection ou moulage de béton dans le four pour former une paroi additionnelle constituant le manchon.

Le manchon étant constitué d'une paroi additionnelle rapportée sur la paroi de la zone de fluidisation et qui peut être en briques réfractaires ou en béton, les techniques de pose et dépose des matériaux réfractaires pour réaliser et retirer cette paroi supplémentaire, temporaire, sont les mêmes que celles utilisées pour faire des travaux de maintenance ou de démontage des murs réfractaires à savoir par descellement des briques ou découpe pour l'évacuation en petit morceaux et facilement transportable.

On décrira maintenant l'invention plus en détails en référence aux figures qui représentent :

[Fig. 1] : une vue en coupe longitudinale d'un four d'incinération selon l'invention en mode de fonctionnement nominal ;

[Fig. 2] : une vue en coupe longitudinale du four de la figure 1 en mode de fonctionnement de démarrage.

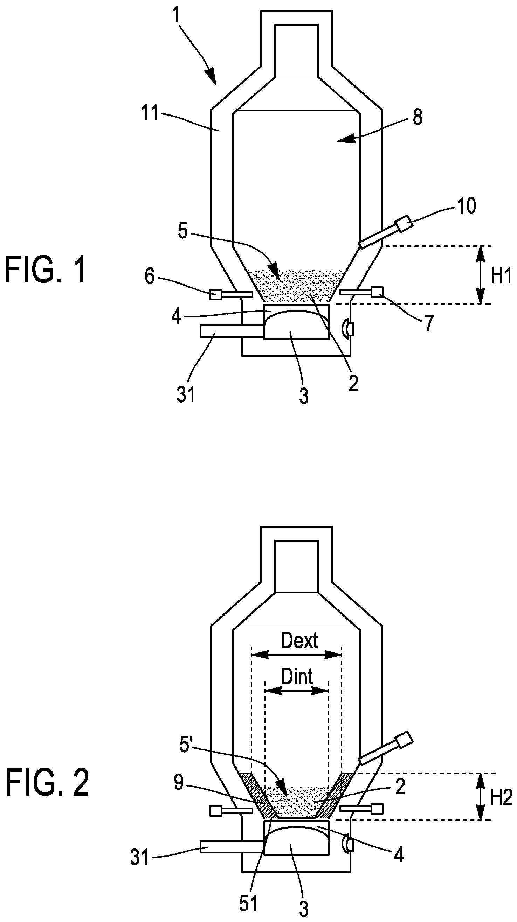

Comme on peut le voir à la figure 1, un four d'incinération 1 de matières organiques issues du traitement de déchets industriels, agricoles ou d'eaux usées, telles que des boues, présente une enceinte 11, typiquement en béton réfractaire, dans la partie inférieure de laquelle se trouve un lit de particules fluidisées, de préférence un lit de sable 2.

Le four comprend en outre une boîte à vent 3 qui reçoit par une entrée radiale 31 de l'air de fluidisation qui, de préférence, a été chauffé. La partie supérieure de la boîte à vent 3 supporte un dôme de fluidisation 4 qui constitue une pièce essentielle du four 1. En effet, c'est au travers de ce dôme 4 que se fait la répartition de l'air de fluidisation issu de la boîte à vent 3, par l'intermédiaire de passages ménagés dans le dôme 4, et au travers desquels de l'air issu de la boîte à vent 3 est réparti dans la partie de l'enceinte appelée zone de fluidisation Zf 5 qui correspond à l'emplacement du lit de sable 2.

Dans cette zone de fluidisation Zf 5 sont disposées au moins une alimentation en boues 6 et au moins une injection de combustible d'appoint 7. Dans certains fours, cette alimentation en boues s'effectue au-dessus de la zone de fluidisation. Une alimentation 10 est également prévue pour introduire le sable dans le four. Au-dessus de la zone de fluidisation 5 se trouve la zone de d'expansion et de post-combustion 8, surmontée de la voûte supérieure de l'enceinte 11 au niveau de laquelle se trouve une conduite d'évacuation des produits de combustion (non représentée).

Ce four 1 est configuré pour le traitement d'une valeur nominale Vn de volume de boues à traiter Vmo.

Au niveau de la zone de fluidisation Zf 5, la paroi du four 1 présente une forme de tronc de cône dont la base supérieure la plus grande est côté enceinte 11 et dont la base inférieure la plus petite est côté dôme de fluidisation 4.

La zone de fluidisation 5 délimite ainsi un volume dans lequel se trouve le lit de sable 2 au-dessus du dôme de fluidisation 4 aménagée avec des éjecteurs de soufflage 51.

De ce fait, sous l'effet de l'air réchauffé issu de la boîte à vent 3 et qui traverse le dôme de fluidisation 4, un déplacement du lit de sable 2 est obtenu qui ne peut aller que vers le haut du four 1. La vitesse ascensionnelle est liée au débit d'air injecté et à la section inférieure du tronc de cône.

La vitesse ascensionnelle déterminée est pour la valeur nominale de traitement typiquement comprise entre 0,75 m/s pour une bonne fluidisation du sable et 1,2 m/s pour éviter un envol de sable trop important, de préférence une vitesse de 0,9 m/s.

Le four 1 est donc dimensionné pour une valeur nominale Vn de traitement des boues. Toutefois, de manière récurrente, le volume de boues, en phase de démarrage de production de ce type de four 1, est très inférieur au volume nominal souhaité et visé pour lequel la construction du four 1 a été élaborée.

De manière à faire fonctionner le four 1 de façon optimale même lors de phase de démarrage de production, c'est-à-dire lorsque le volume de boues à traiter Vmo est inférieur à la valeur nominale Vn de volume de boues à traiter, on réduit le volume de la zone de fluidisation zf 5 d'un volume initial Vfi à un volume réduit Vfr, et on obture des passages d'air pour ne laisser actifs que les passages débouchant dans la zone de fluidisation réduite 5'.

Pour mettre en oeuvre cela, on met en place dans la zone de fluidisation Zf 5 des moyens de réduction du volume de ladite zone 5 et des moyens d'obturation des passages d'air, configurés pour ne laisser actifs que les passages débouchant dans la zone de fluidisation réduite Zfr 5'.

Comme on peut le voir à la figure 2, la portion d'enceinte 11 délimitant la zone de fluidisation Zf 5 présente appuyé contre elle un insert sous forme d'un manchon tronconique 9. Ce manchon 9 s'étend depuis le dôme de fluidisation 4 jusqu'à une hauteur H2 inférieure ou égale à la hauteur H1 de la portion tronconique de l'enceinte 11.

Ce manchon 9 présente un diamètre extérieur Dext qui varie en fonction de la hauteur H2 de l'insert 9, correspondant au diamètre intérieur D1 de la zone de fluidisation 5 et un diamètre intérieur Dint, inférieur correspondant au diamètre Dext moins deux fois la valeur de l'épaisseur A de l'insert 9. De ce fait, le volume de la zone de fluidisation Zfr 5' ainsi créée est réduit.

Ce volume Vfr étant réduit, le volume de sable aussi est réduit. Le débit volumique d'air est quant à lui limité par l'obstruction des passages d'air par l'insert 9 qui repose en partie sur le dôme de fluidisation 4. L'effet tronconique permet aussi une reprise de charge de l'élément tronconique par la partie tronconique de l'enceinte. La section au niveau du dôme de fluidisation 4 est réduite et à vitesse d'air égale le débit d'air de fluidisation est réduit.

L'épaisseur A de l'insert tronconique 9 est proportionnelle à la réduction du débit d'air souhaité pour brûler les matières organiques à traiter (boues et/ou autres déchets).

Le débit volumique d'air de fluidisation de la zone de fluidisation 5' de volume réduit Vfr est donc réduit proportionnellement au débit initial selon la formule suivante :

$$\Phi v' = \Phi v \times ((D1 - 2A) / D1)^2$$

avec

D1 : diamètre intérieur moyen à la base de la zone de fluidisation de l'enceinte conçue pour la production à horizon futur

A : épaisseur de l'élément ajouté en périphérie de la zone de fluidisation pour réduire le diamètre de la zone de fluidisation et compris entre 0,2 et 0,7 et de préférence compris entre 0.25 m et 0,350 m.

Pour déterminer quel débit d'air est nécessaire avec un volume de boues à traiter inférieur à la valeur nominale, la formule est :

$$\Phi v' = \Phi b' \times S \times MV \times Coef1 \times Coef2,$$

avec

$\Phi_v'$ : débit d'air de fluidisation en kg/h

$\Phi_b'$ : débit de boues brut en kg/h

S : fraction de matière sèche dans les boues (brut) en %

MV : fraction de matière organique dans la fraction sèche en %

Coef1 : ratio stoechiométrique correspondant à la quantité d'air en kg/h pour brûler 1 kg de matière organique variable entre 5 et 10 selon les type de matière organiques

Coef2 : excès d'air souhaité pour assurer la combustion complète de la matière organique entre 1.01 et 1.4.

Ainsi, selon un exemple de mise en oeuvre du procédé, on réalise un four dont le diamètre de la zone de fluidisation est de 2,83 m (taille X) est construit pour traiter au moins 963 kgMS/h. Un tel four fonctionne avec un débit d'air de fluidisation préchauffé, par exemple à 550°C, entre 6700 Nm3/h (vitesse minimale d'air insufflé pourla fluidisation ~0,75 m/s) correspondant à un débit de matière sèche de boue, par exemple de 963 kgMS/h et 10 750 Nm3/h (vitesse maximale de fluidisation ~1,2 m/s) correspondant à un débit de 1 550 kgMS/h. La teneur en oxygène est dans les deux cas identique.

Le démarrage du four est caractérisé par un débit bien inférieur au régime minimal de 600 kgMS/h pour lequel un débit d'air de fluidisation de 4250 Nm3/h serait suffisant et de ce fait, un four de taille inférieure (taille X-1) serait requis. Si ce débit est réparti 7 jours sur 7 et appliqué au four de la taille d'origine (X), la vitesse de fluidisation pour ce type de four déjà construit serait alors de 0,47 m/s et elle est donc trop faible en termes de turbulence dans le lit.

Deux solutions sont possibles. Dans un premier cas, les boues sont traitées sur 3 à 4 jours par semaine au débit minimal du four pour lequel il a été construit (963 kgMS/h) avec une consommation de 19 kg/h de gaz nécessaires pendant l'incinération des boues. En revanche, le four sera ensuite maintenu en température pendant le restant de la semaine ce qui correspond à une consommation importante de l'ordre de 40 kg/h de gaz naturel

Dans un second cas, les boues sont traitées 7 jours/7 avec un débit d'air relevé à 6700 Nm3/h pour respecter la vitesse minimal d'air de fluidisation de 0,75 m/s pour avoir la turbulence nécessaire dans le lit de sable. L'excès d'air génère des pertes et augmente fortement la consommation de combustible auxiliaire, faisant passer d'une consommation de 19 kg/h (comme dans le cas précédent sur les 3 à 4 jours d'incinération) à 46 kg/h de gaz naturel sur les 7 jours, pour compenser les pertes. Cette solution est choisie par l'exploitant pour préserver les équipements en aval du four.

On met alors en oeuvre le procédé de l'invention, et on réduit la dimension de la zone de fluidisation pour passer à un diamètre de 2,23 m en ajoutant un insert d'une épaisseur de 300 mm sur une hauteur de 1,3 m par exemple. La quantité d'air est alors adaptée à la quantité de boue tout en conservant une bonne turbulence dans le four. Le débit peut être réduit à 4200 Nm3/h pour respecter la vitesse minimale de turbulence de 0,75 m/s dans cette nouvelle zone de fluidisation réduite. L'excès d'air est réduit, ainsi qu'avantageusement la consommation en gaz naturel de 46 kg/h à 18 kg/h.

Le procédé de l'invention permet non seulement une économie d'exploitation de l'ordre de 100 000 €/an mais limite avantageusement les émissions de $CO_2$ (616 t $CO_2$/an ne sont plus rejetés dans l'atmosphère).

Dans certaines stations de traitements des déchets déjà en place, la mise en oeuvre d'un four d'incinération selon l'invention permet un gain au niveau du gaz naturel employé en tant que combustible de 50 à 200 k€uros par an pour un investissement estimé de 30 à 70 k€uros. L'invention offre donc un avantage économique intéressant tout en étant simple à mettre en oeuvre que ce soit dans des installations déjà existantes ou nouvelles.

## Revendications

1. Procédé d'incinération de matières organiques, constituées de matière organique prisonnière d'une matrice minérale et/ou liquide, en particulier issues du traitement des eaux usées, de déchets industriels ou agricoles, telles que des boues et notamment des boues de stations d'épuration, dans un four d'incinération à lit fluidisé,

   ledit four comprenant une enceinte dans la partie inférieure de laquelle se trouve un lit de particules, préférentiellement du sable, constituant une zone de fluidisation Zf, zone de fluidisation Zf dans laquelle les matières organiques sont introduites en tant que combustible tandis que de l'air est injecté en tant que comburant dans le lit de sable depuis une boîte à vent au travers d'un dôme de fluidisation (4) surmontant ladite boîte, l'air traversant des passages aménagés dans le dôme de fluidisation,
   le four étant configuré pour traiter une valeur nominale Vn de volume de matières organiques à traiter Vmo, **caractérisé en ce que** le procédé comprend une étape d'ajustement du volume de la zone de fluidisation Zf et du débit d'air entrant dans ladite zone de fluidisation Zf en fonction du volume de matières organiques à traiter Vmo dans laquelle, lorsque le volume de matières organiques à traiter Vmo est inférieur à la valeur nominale Vn, on réduit le volume de la zone de fluidisation d'un volume initial Vfi à un volume réduit Vfr, et on réduit le débit d'air en obturant des passages d'air pour ne laisser actifs que les passages débouchant dans la zone de fluidisation ainsi réduite Zfr.

2. Procédé selon la revendication 1, **caractérisé en ce que** l'ajustement du volume de la zone de fluidisation est une réduction de volume temporaire.

3. Procédé selon la revendication 2, **caractérisé en ce qu'**il comprend une étape d'ajustement de volume complémentaire dans laquelle, dès que le volume de matières organiques à traiter Vmo se rapproche ou atteint la valeur nominale Vn, on restaure le volume initial de la zone de fluidisation Vfi approprié pour traiter le volume nominal Vn de matières organiques à traiter et le débit d'air initial.

4. Procédé selon l'une des revendications 1 à 3, **caractérisé en ce qu'**on installe un insert se présentant sous forme d'un manchon (9) de forme complémentaire à la portion de l'enceinte (11) du four délimitant la zone de fluidisation Zf (5) et s'étendant contre ladite portion de l'enceinte (11) depuis le dôme de fluidisation (4) sur une hauteur (H) inférieure ou égale à la hauteur (H1) de la zone de fluidisation (5).

5. Procédé selon l'une des revendications 1 à 4, **caractérisé en ce qu'**on réduit également le volume de l'enceinte du four au-dessus de la zone de fluidisation, en installant un insert s'étendant sur toute la hauteur du four.

6. Procédé selon la revendication 4, **caractérisé en ce que** l'enceinte (11) au niveau de la zone de fluidisation (5) présente une forme de tronc de cône entre 0° et 45° par rapport à la verticale, le manchon (9) étant préférentiellement de forme tronconique avec :

   - son diamètre extérieur Dext égal au diamètre du tronc de cône de l'enceinte (11) sur la hauteur du tronc de cône ajouté :
   Dext = D1 pouvant varier sur la hauteur H

D1 étant le diamètre intérieur de la zone de fluidisation de l'enceinte conçue pour la production à horizon futur et H la hauteur de la zone sur laquelle se développe la fluidisation des particules en dynamique

- son diamètre intérieur Dint égal au diamètre extérieur du tronc de cône ajouté moins deux fois une épaisseur A du manchon

Dint = Dext - A x 2, avec A étant l'épaisseur de l'élément ajouté en périphérie de la zone de fluidisation pour réduire le diamètre de la zone de fluidisation, compris entre 0,15 et 0,7 m, de préférence compris entre 0.25 m et 0,35 m,

- la hauteur du tronc de cône H étant choisie tel que : H = B + C, avec B correspondant à la hauteur du lit de particules au repos, B étant compris entre 0.3 m et 1.5 m, de préférence égal à environ 1 m, et C correspondant à la dynamique, c'est-à-dire la turbulence souhaitée dans le lit de sable compris entre 0 et 2 m, de préférence compris entre 0.3 et 0.5 m.

7. Four (1) d'incinération de matières organiques notamment issues du traitements des eaux usées, de déchets industriels ou agricoles, tel que des boues, présentant une enceinte dans la partie inférieure de laquelle se trouve un lit de particules fluidisé (2), tel que du sable, le four comprenant en outre au moins du bas vers le haut

une boîte à vent (3) dont la partie supérieure supporte un dôme de fluidisation (4) présentant des passages au travers desquels l'air issu de la boîte à vent (3) est réparti dans une zone de fluidisation Zf (5) qui correspond au lit de particules (2), au moins une alimentation en matières organiques (6) et au moins des moyens d'injection de combustible d'appoint (7) étant prévues pour alimenter la zone de fluidisation, au-dessus de la zone de fluidisation Zf (5) se trouve la zone de d'expansion et de post-combustion (8), surmontée d'une voûte supérieure de l'enceinte (11) au niveau de laquelle se trouve une conduite d'évacuation des produits de combustion, le four (1) étant configuré pour le traitement d'une valeur nominale Vn de volume de matières organiques à traiter Vmo, **caractérisé en ce que** le four (1) comporte des moyens de réduction (9) du volume de la zone de fluidisation Zf (5) d'un volume initial Vfi à un volume réduit Vfr et des moyens d'obturation des passages d'air, configurés pour réduire le débit d'air entrant en ne laissant actifs que les passages débouchant dans la zone de fluidisation réduite Zfr (5'), lorsque le volume des matières organiques à traiter Vmo est inférieur à la valeur nominale Vn.

8. Four (1) selon la revendication 7, **caractérisé en ce que** les moyens de réduction du volume Vf de la zone de fluidisation Zf et les moyens d'obturation des passages d'air sont confondus.

9. Four selon l'une des revendications 7 et 8, **caractérisé en ce que** lesdits moyens de réduction et d'obturation sont constitués d'un insert installé dans la zone de fluidisation Zf, se présentant sous forme d'un manchon (9) de forme complémentaire à la portion de l'enceinte (11) délimitant la zone de fluidisation Zf (5) et s'étendant contre ladite portion de l'enceinte (11) depuis le dôme de fluidisation (4).

10. Four (1) selon la revendication 8, **caractérisé en ce que** l'épaisseur A de l'insert (9) est choisie pour définir le volume de la zone de fluidisation réduite Vfr et une section du dôme de fluidisation réduite, l'épaisseur A de cet insert (9) étant proportionnelle à la réduction du débit d'air souhaité pour brûler les matières organiques, le débit d'air souhaité étant défini selon la formule suivante :

$$\Phi v' = \Phi b' \times S \times MV \times Coef1 \times Coef2$$

dans laquelle :

$\Phi_v'$ : débit d'air de fluidisation en kg/h
$\Phi_b'$ : débit de matières organiques en kg/h
S : fraction de matière sèche dans les matières organiques (brut) en %
MV : fraction de matière organique dans la fraction sèche en %
Coef1 : ratio stoechiométrique correspondant à la quantité d'air en kg/h pour brûler 1 kg de matière organique variable entre 5 et 10 selon les types de matières organiques
Coef2 : excès d'air souhaité pour assurer la combustion complète de la matière organique entre 1.01 et 1.4 , ce débit d'air étant également défini par la formule suivante :

$$\Phi v' = \Phi v \times (( D1 - 2A) / D1)^2$$

avec

D1 : le diamètre intérieur moyen à la base de la zone de fluidisation (5) de l'enceinte conçue pour la production à horizon futur,

Φv : le débit d'air de fluidisation nominal en kg/h et

A : l'épaisseur de l'insert (9) ajouté en périphérie de la zone de fluidisation (5) pour réduire le diamètre intérieur de la zone de fluidisation (5), typiquement compris entre 0,15 m et 0,7 m, de préférence compris entre 0.250 m et 0,350 m.

**11.** Four (1) selon l'une des revendications 7 à 10, **caractérisé en ce que** lesdits moyens de réduction et d'obturation sont rapportés dans un four existant.

**12.** Four (1) selon l'une des revendications 7 à 10, **caractérisé en ce que** lesdits moyens de réduction et d'obturation sont prévus lors de la construction du four (1).

**13.** Four (1) selon l'une des revendications 7 à 12, **caractérisé en ce que** l'insert (9) est constitué d'une paroi additionnelle rapportée sur la paroi de la zone de fluidisation (5), en matériaux réfractaires.

**14.** Four selon la revendication 13, **caractérisé en ce que** les matériaux utilisés sont des briques de matériau réfractaire, du béton.

**15.** Four (1) selon l'une des revendications 11 à 14, **caractérisé en ce que** lesdits moyens de réduction et d'obturation sont démontables.

**16.** Four (1) selon l'une des revendications 7 à 15, **caractérisé en ce que** des moyens de réduction de volume s'étendent au-delà de la zone de fluidisation sur toute la hauteur du four.

**Patentansprüche**

**1.** Verfahren zur Verbrennung von organischen Stoffen, die in einer mineralischen und/oder flüssigen Matrix eingeschlossen sind, insbesondere aus der Abwasserbehandlung, aus industriellen oder landwirtschaftlichen Abfällen wie Schlämmen und insbesondere Schlämmen von Kläranlagen, in einem Verbrennungsofen mit Wirbelbett,

wobei der Ofen eine Verbrennungskammer umfasst, in deren unterem Teil sich ein Partikelbett, vorzugsweise aus Sand, befindet, das eine Fluidisierungszone Zf bildet, wobei in die Fluidisierungszone Zf organische Stoffe als Brennstoff eingeführt werden, während Luft als Oxidationsmittel von einem Windkasten durch eine Fluidisierungskuppel (4), die über dem Kasten liegt, in das Sandbett eingeblasen wird, wobei die Luft durch Durchgänge strömt, die in der Fluidisierungskuppel angeordnet sind und der Ofen so konfiguriert ist, dass er einen Nennwert Vn des zu verarbeitenden Volumens an organischen Stoffen Vmo verarbeitet, **dadurch gekennzeichnet, dass** das Verfahren einen Schritt zur Anpassung des Volumens der Fluidisierungszone Zf und des Luftdurchsatzes, der in die Fluidisierungszone Zf eintritt, an das Volumen der zu behandelnden organischen Stoffe Vmo umfasst, wobei, wenn das Volumen der zu behandelnden organischen Stoffe Vmo kleiner als der Nennwert Vn ist, das Volumen der Fluidisierungszone von einem anfänglichen Volumen Vfi auf ein reduziertes Volumen Vfr reduziert wird und der Luftdurchsatz durch Verschließen von Luftdurchgängen reduziert wird, um nur die Durchgänge aktiv zu lassen, die in die so reduzierte Fluidisierungszone Zfr münden.

**2.** Verfahren nach Anspruch 1, **dadurch gekennzeichnet, dass** die Anpassung des Volumens der Fluidisierungszone eine vorübergehende Volumenreduzierung ist.

**3.** Verfahren nach Anspruch 2, **dadurch gekennzeichnet, dass** es einen zusätzlichen Volumenanpassungsschritt umfasst, bei dem, sobald sich das Volumen der zu behandelnden organischen Stoffe Vmo dem Nennwert Vn nähert oder diesen erreicht, das ursprüngliche Volumen der Fluidisierungszone Vfi wiederhergestellt wird, welches geeignet ist, das Nennvolumen Vn der zu behandelnden organischen Stoffe und den anfänglichen Luftdurchsatz zu behandeln.

**4.** Verfahren nach einem der Ansprüche 1 bis 3, **dadurch gekennzeichnet, dass** ein Einsatz installiert wird, der in Form einer Hülse (9) vorliegt, deren Form komplementär zu dem Abschnitt der Verbrennungskammer (11) des Ofens ist, der die Fluidisierungszone Zf (5) abgrenzt, und der sich gegen diesen Abschnitt der Verbrennungskammer (11) von der Fluidisierungskuppel (4) aus über eine Höhe (H) erstreckt, die kleiner oder gleich der Höhe (H1) der Fluidisierungszone (5) ist.

**5.** Verfahren nach einem der Ansprüche 1 bis 4, **dadurch gekennzeichnet, dass** man auch das Volumen der Verbrennungskammer des Ofens oberhalb der Fluidisierungszone reduziert, indem man einen Einsatz einbaut, der sich über die gesamte Höhe des Ofens erstreckt.

**6.** Verfahren nach Anspruch 4, **dadurch gekennzeichnet, dass** die Verbrennungskammer (11) im Bereich der Fluidisierungszone (5) eine Kegelstumpfform zwischen 0° und 45° zur Vertikalen aufweist, wobei die Hülse (9) vorzugsweise kegelstumpfförmig ist mit:

- ihrem Außendurchmesser Dext gleich dem Durchmesser des Kegelstumpfes der Verbrennungskammer (11) auf der Höhe des hinzugefügten Kegelstumpfes:
Dext = D1, der auf der Höhe H variieren kann
wobei D1 der Innendurchmesser der Fluidisierungszone der für die künftige Produktion konzipierten Kammer ist und H die Höhe der Zone ist, auf der sich die dynamische Partikelfluidisierung entwickelt
- ihrem Innendurchmesser Dint gleich dem Außendurchmesser des hinzugefügten Kegelstumpfes minus zweimal eine Dicke A der Hülse
Dint= Dext - A x 2, wobei A die Dicke des Elements ist, das am Rand der Fluidisierungszone hinzugefügt wird, um den Durchmesser der Fluidisierungszone zu verringern, und zwischen 0,15 und 0,7 m, vorzugsweise zwischen 0,25 und 0,35 m beträgt,
- wobei die Höhe H des Kegelstumpfes so gewählt wird, dass:

$$H = B + C,$$

, wobei B
der Höhe des ruhenden Partikelbetts entspricht und B zwischen 0,3 m und 1,5 m, vorzugsweise etwa 1 m beträgt, und C der Dynamik, d. h. der gewünschten Turbulenz im Sandbett zwischen 0 und 2 m, vorzugsweise zwischen 0,3 und 0,5 m entspricht.

**7.** Ofen (1) zur Verbrennung von organischen Stoffen, insbesondere aus der Behandlung von Abwasser, industriellen oder landwirtschaftlichen Abfällen, wie z. B. Schlamm, mit einer Verbrennungskammer, in deren unterem Teil sich ein fluidisiertes Partikelbett (2), wie z. B. Sand, befindet, wobei der Ofen außerdem zumindest von unten nach oben einen Windkasten (3) umfasst, dessen oberer Teil eine Fluidisierungskuppel (4) trägt, die Durchgänge aufweist, durch die die aus dem Windkasten (3) stammende Luft in einer Fluidisierungszone Zf (5) verteilt wird, die dem Partikelbett (2) entspricht, wobei mindestens eine Versorgung mit organischen Stoffen (6) und mindestens Mittel zum Einspritzen von Zusatzbrennstoff (7) vorgesehen sind, um die Fluidisierungszone zu versorgen, wobei sich über der Fluidisierungszone Zf (5) die Expansions- und Nachverbrennungszone (8) befindet, über der sich ein oberes Kammergewölbe (11) befindet, in dessen Höhe sich ein Abzugskanal für die Verbrennungsprodukte befindet, wobei der Ofen (1) für die Behandlung eines Volumennennwertes Vn an zu behandelnden organischen Stoffen Vmo konfiguriert ist, **dadurch gekennzeichnet, dass** der Ofen (1) Reduzierungsmittel (9) des Volumens der Fluidisierungszone Zf (5) von einem Anfangsvolumen Vfi zu einem reduzierten Volumen Vfr und Mittel zum Verschließen der Luftdurchgänge umfasst, die so konfiguriert sind, dass sie die Menge der einströmenden Luft reduzieren, indem sie nur die Durchgänge aktiv lassen, die in die Zone der reduzierten Fluidisierung Zfr (5') münden, wenn das Volumen der zu behandelnden organischen Stoffe Vmo kleiner ist als der Nennwert Vn.

**8.** Ofen (1) nach Anspruch 7, **dadurch gekennzeichnet, dass** die Mittel zur Reduzierung des Volumens Vf der Fluidisierungszone Zf und die Mittel zum Verschließen der Luftdurchgänge ineinander übergehen.

**9.** Ofen nach einem der Ansprüche 7 oder 8, **dadurch gekennzeichnet, dass** die Reduzierungs- und Verschlussmittel aus einem Einsatz bestehen, der in der Fluidisierungszone Zf installiert wird und die Form einer Hülse (9) mit einer zum Abschnitt der Verbrennungskammer (11) komplementären Form hat, die die Fluidisierungszone Zf (5) abgrenzt, und sich von der Fluidisierungskuppel (4) ausgehend gegen den Abschnitt der Verbrennungskammer (11) erstreckt.

**10.** Ofen (1) nach Anspruch 8, **dadurch gekennzeichnet, dass** die Dicke A des Einsatzes (9) so gewählt ist, dass sie das Volumen der reduzierten Fluidisierungszone Vfr und einen Querschnitt der reduzierten Fluidisierungskuppel definiert, wobei die Dicke A dieses Einsatzes (9) proportional ist zur Reduzierung des gewünschten Luftdurchsatzes zum Verbrennen der organischen Stoffe, wobei der gewünschte Luftdurchsatz gemäß der folgenden Formel definiert wird:

$$\phi v' = \phi b' \times S \times MV \times Coef1 \times Coef2$$

wobei

$\phi_v$' : Fluidisierungsluftdurchsatz in kg/Std
$\phi b$': Durchsatz an organischen Stoffen in kg/Std
S: Anteil der Trockensubstanz in den organischen Stoffen (brutto) in %
MV: Anteil der organischen Stoffe im Anteil der Trockensubstanz in %
Coef1: stöchiometrisches Verhältnis entsprechend der Luftmenge in kg/Std, um 1 kg organischer Stoffe zu verbrennen, das je nach Art der organischen Stoffe zwischen 5 und 10 variiert
Coef2: gewünschter Luftüberschuss zur vollständigen Verbrennung der organischen Stoffe, der zwischen 1,01 und 1,4 liegt,
wobei dieser Luftdurchsatz auch durch die folgende Formel definiert wird:

$$\phi v' = \phi v \times ((D1 - 2A) / D1)^2$$

mit

D1: der mittlere Innendurchmesser an der Basis der Fluidisierungszone (5) der für die künftige Produktion ausgelegten Verbrennungskammer,
$\phi v$: der nominale Fluidisierungsluftdurchsatz in kg/Std und
A: die Dicke des Einsatzes (9), der am Rand der Fluidisierungszone (5) hinzugefügt wird, um den Innendurchmesser der Fluidisierungszone (5) zu verringern, der typischerweise zwischen 0,15 und 0,7 m, vorzugsweise zwischen 0,250 und 0,350 m beträgt.

11. Ofen (1) nach einem der Ansprüche 7 bis 10, **dadurch gekennzeichnet, dass** die Reduzierungs- und Verschlussmittel in einen bestehenden Ofen eingebaut werden.

12. Ofen (1) nach einem der Ansprüche 7 bis 10, **dadurch gekennzeichnet, dass** die Reduzierungs- und Verschlussmittel bei der Fertigung des Ofens (1) vorgesehen werden.

13. Ofen (1) nach einem der Ansprüche 7 bis 12, **dadurch gekennzeichnet, dass** der Einsatz (9) aus einer zusätzlichen Wand besteht, die an der Wand der Fluidisierungszone (5) eingebaut wird und aus feuerfesten Materialien besteht.

14. Ofen nach Anspruch 13, **dadurch gekennzeichnet, dass** die verwendeten Materialien Ziegel aus feuerfestem Material, Beton sind.

15. Ofen (1) nach einem der Ansprüche 11 bis 14, **dadurch gekennzeichnet, dass** die Reduzierungs- und Verschlussmittel abnehmbar sind.

16. Ofen (1) nach einem der Ansprüche 7 bis 15, **dadurch gekennzeichnet, dass** sich über die Fluidisierungszone hinaus auf der gesamten Höhe des Ofens Mittel zur Volumenreduzierung erstrecken.

**Claims**

1. Method for incinerating organic matter, consisting of organic matter trapped in a mineral and/or liquid matrix, in particular issued from the treatment of waste water, industrial or agricultural waste, such as sludge and especially sewage plant sludge, in a fluidised bed incineration furnace,

said furnace comprising an enclosure in the lower part of which there is a bed of particles, preferably sand, constituting a fluidisation zone Zf, the fluidisation zone Zf into which the organic matter is introduced as fuel while air is injected as oxidant into the sand bed from a wind box through a fluidisation dome (4) on top of said box, the air passing through passages provided in the fluidisation dome,

the furnace being configured to treat a nominal value Vn of volume Vmo of organic matter to be treated, **characterised in that** the method comprises a step of adjusting the volume of the fluidisation zone Zf and the flow rate of air coming into said fluidisation zone Zf as a function of the volume Vmo of organic matter to be treated, in which, when the volume Vmo of organic matter to be treated is lower than the nominal value Vn, the volume of the fluidisation zone is reduced from an initial volume Vfi to a reduced volume Vfr, and the air flow rate is reduced by sealing air passages so as to leave active only passages opening into the thus reduced fluidisation zone Zfr.

2. Method according to claim 1, **characterised in that** the adjustment of the volume of the fluidisation zone is a temporary volume reduction.

3. Method according to claim 2, **characterised in that** it comprises a complementary volume adjustment step in which, as soon as the volume Vmo of organic matter to be treated approaches or reaches the nominal value Vn, the initial volume Vfi of the fluidisation zone suitable for treating the organic matter nominal volume to be treated Vn and the initial air flow rate are restored.

4. Method according to one of claims 1 to 3, **characterised in that** an insert is installed in the form of a sleeve (9) of a shape complementary to the portion of the enclosure (11) of the furnace delimiting the fluidisation zone Zf (5) and extending against said portion of the enclosure (11) from the fluidisation dome (4) over a height (H) lower than or equal to the height (H1) of the fluidisation zone (5).

5. The method according to one of claims 1 to 4, **characterised in that** the volume of the furnace enclosure above the fluidisation zone is also reduced by installing an insert extending over the entire height of the furnace.

6. The method according to claim 4, **characterised in that** the enclosure (11) at the fluidisation zone (5) has a cone frustum shape between 0° and 45° with respect to the vertical, the sleeve (9) preferably having a frustoconical shape with :

   - its external diameter Dext equal to the diameter of the cone frustum of the enclosure (11) over the height of the added cone frustum:
   Dext = D1 which can vary over the height H
   D1 being the internal diameter of the fluidisation zone of the enclosure designed for future production and H the height of the zone over which the fluidisation of the particles develops dynamically
   - its internal diameter Dint equal to the external diameter of the added cone frustum minus two times a thickness A of the sleeve
   Dint = Dext - A x 2, with A being the thickness of the element added at the periphery of the fluidisation zone to reduce the diameter of the fluidisation zone, between 0.15 and 0.7 m, preferably between 0.25 m and 0.35 m,
   - the height of the cone frustum H being chosen such that: H = B + C, with B corresponding to the height of the particle bed at rest, B being between 0.3 m and 1.5 m, preferably equal to approximately 1 m, and C corresponding to the dynamics, that is the desired turbulence in the sand bed between 0 and 2 m, preferably between 0.3 and 0.5 m.

7. Furnace (1) for incinerating organic matter, especially from the treatment of waste water, industrial or agricultural waste, such as sludge, having an enclosure in the lower part of which there is a fluidised particle bed (2), such as sand, the furnace further comprising, at least from bottom to top

   a wind box (3), the upper part of which supports a fluidisation dome (4), having passages through which the air coming from the wind box (3) is distributed into a fluidisation zone Zf (5) which corresponds to the particle bed (2), at least one organic matter feed (6) and at least supplemental fuel injection means (7) being provided to feed the fluidisation zone,
   above the fluidisation zone Zf (5) there is the expansion and post-combustion zone (8), on top of which lies an upper vault of the enclosure (11) at which there is a discharge pipe for the combustion products, the furnace (1) being configured for the treatment of a nominal value Vn of volume Vmo of organic matter to be treated, **characterised in that** the furnace (1) includes means (9) for reducing the volume of the fluidisation zone Zf (5) from an initial volume Vfi to a reduced volume Vfr and means for sealing the air passages, configured to reduce the incoming air flow rate by leaving active only the passages opening into the reduced fluidisation zone Zfr (5'), when the volume Vmo of organic matter to be treated is lower than the nominal value Vn.

8. Furnace (1) according to claim 7, **characterised in that** the means for reducing the volume Vf of the fluidisation zone Zf and the means for sealing the air passages are one and the same.

9. Furnace according to one of claims 7 and 8, **characterised in that** said reduction and sealing means consist of an insert installed in the fluidisation zone Zf, in the form of a sleeve (9) with a shape complementary to the portion of the enclosure (11) delimiting the fluidisation zone Zf (5) and extending against said portion of the enclosure (11) from the fluidisation dome (4).

10. Furnace (1) according to claim 8, **characterised in that** the thickness A of the insert (9) is chosen to define the volume of the reduced fluidisation zone Vfr and a reduced cross-sectional area of the fluidisation dome, the thickness A of this insert (9) being proportional to the reduction in the air flow rate desired to combust the organic matter, the desired air flow rate being defined according to the following formula:

$$\Phi v' = \Phi b' \times S \times MV \times Coef1 \times Coef2$$

where:

$\Phi v'$: fluidisation air flow rate in kg/h
$\Phi b'$: organic matter flow rate in kg/h
S: fraction of dry matter in organic matter (raw) in %
MV: fraction of organic matter in the dry fraction in %
Coef1: stoichiometric ratio corresponding to the amount of air in kg/h to combust 1 kg of organic matter, ranging from 5 to 10 depending on the type of organic matter
Coef2: excess air desired to ensure complete combustion of the organic matter between 1.01 and 1.4 ,
this air flow rate being also defined by the following formula:

$$\Phi v' = \Phi v \times (( D1 - 2A) / D1)^2$$

with

D1: the average internal diameter at the base of the fluidisation zone (5) of the enclosure designed for future production,
$\Phi v$: the nominal fluidisation airflow rate in kg/h and
A: the thickness of the insert (9) added at the periphery of the fluidisation zone (5) to reduce the internal diameter of the fluidisation zone (5), typically between 0.15 m and 0.7 m, preferably between 0.250 m and 0.350 m.

11. Furnace (1) according to one of the claims 7 to 10, **characterised in that** said reduction and sealing means are inserted in an existing furnace.

12. Furnace (1) according to one of claims 7 to 10, **characterised in that** said reduction and sealing means are provided during the construction of the furnace (1).

13. Furnace (1) according to one of claims 7 to 12, **characterised in that** the insert (9) consists of an additional wall inserted to the wall of the fluidisation zone (5), made of refractory materials.

14. Furnace according to claim 13, **characterised in that** the materials used are bricks of refractory material, concrete.

15. Furnace (1) according to one of claims 11 to 14, **characterised in that** said reduction and sealing means can be dismantled.

16. Furnace (1) according to one of claims 7 to 15, **characterised in that** volume reduction means extend beyond the fluidisation zone over the entire height of the furnace.

FIG. 1

FIG. 2

**EP 4 028 692 B1**

**RÉFÉRENCES CITÉES DANS LA DESCRIPTION**

**Documents brevets cités dans la description**

- JP S57127716 B

- US 4363292 A